# EUROPÄISCHE PATENTANMELDUNG

(11) **EP 4 063 795 A1**
(43) Veröffentlichungstag der Anmeldung: **28.09.2022**
(21) Anmeldenummer: 21164506.4
(22) Anmeldetag: 24.03.2021
(51) Int. Cl.: G01D 3/08

(54) **SENSORSYSTEM ZUR MESSUNG DER VARIABILITÄT DER ELEKTRISCHEN SPANNUNG EINER ENERGIEVERSORGUNG**

(71) Anmelder: Siemens Aktiengesellschaft, 80333 München (DE)
(72) Erfinder: Tobola, Andreas, 91058 Erlangen (DE)

(57) **Zusammenfassung**

Die Erfindung gibt ein Sensorsystem (1) aufweisend die folgenden Merkmale an:
- mindestens eine Sensoreinheit (2),
- einen Eingang einer Energieversorgung (3), wobei die Energieversorgung (3) die mindestens eine Sensoreinheit (2) mit elektrischer Energie versorgt, wobei die Energieversorgung eine elektrische Spannung (4) aufweist,
- mindestens eine elektrische Schaltung (5), wobei ein Eingangswert der mindestens einen elektrischen Schaltung (5) die elektrische Spannung (4) ist und wobei ein Ausgangswert der mindestens einen elektrischen Schaltung (5) ein Proportionalitätswert (6) ist, wobei der Proportionalitätswert (6) proportional zu einer Variabilität der elektrischen Spannung (4) ist,
- eine Signalverarbeitungseinheit (8),
- eine Verbindung (7) zwischen der mindestens einen elektrischen Schaltung (5) und der Signalverarbeitungseinheit (8), wobei die Verbindung (7) ausgebildet ist den Ausgangswert von der mindestens einen elektrischen Schaltung an die Signalverarbeitungseinheit (8) zu übertragen,
wobei der Signalverarbeitungseinheit (8) mit einer Abtasteinrichtung (9) verbunden ist, wobei die Abtasteinrichtung (9) ausgebildet ist den Ausgangswert abzutasten, wobei der Ausgangswert herangezogen wird einen Abtastwert zu ermitteln.

Die Erfindung betrifft außerdem ein zugehöriges Verfahren zur Überwachung des Sensorsystems.

## Beschreibung

### HINTERGRUND DER ERFINDUNG

### Gebiet der Erfindung

Die vorliegende Erfindung betrifft ein Sensorsystem aufweisend eine elektrische Schaltung, welche einen Proportionalitätswert proportional zu einer Variabilität der elektrischen Spannung einer Energieversorgung ist. Die Erfindung betrifft außerdem ein zugehöriges Verfahren zur Überwachung des Sensorsystems.

### Beschreibung des Stands der Technik

Die Hauptaufgabe eines Sensorsystems besteht darin, die darin integrierten Sensoren auszulesen und diese Daten zumindest rudimentär aufzubereiten und an eine übergeordnete Einheit, insbesondere eine Edge-Device und/oder eine Cloud, zu übertragen. Dort werden die Daten von einem oder mehreren Sensorsystem ausgewertet, um insbesondere einen Schaden vorzeitig zu erkennen, so dass ein Bauteil vorausschauend ausgetauscht werden kann und um einen kostspieligeren Schaden oder einen Produktionsanlagenstillstand zu vermeiden.

Bevor ein neues Sensorsystem in Verkehr gebracht wird, muss es einer Reihe von Tests bestehen, die die Grenzen des Sensorsystems im Rahmen einer Spezifikation abprüfen. Anschließend, sobald das Sensorsystem im Verkehr ist, muss sichergestellt werden, dass die Messung, die das Sensorsystem durchführt, innerhalb der spezifizierten Bedingungen ausgeführt wird, denn andernfalls ist eine sensorische Erfassung der gewünschten Information in der erforderlichen Qualität nicht gewährleistet.

Während einer Messung unter realen Bedingungen unterliegt ein Sensorsystem einer Reihe von Störungen. Eine nicht seltene Ursache ist die Störung der Messgröße durch eine übermäßig gestörte Versorgungsspannung der Energieversorgung des Sensorsystems. Da ein Sensorsystem verschiedene Sensoren beinhalten kann, kann sich jede Störung unterschiedlich auf die einzelnen Sensoren auswirken.

Die Störungen der Sensor-Energieversorgung können sich als einfache Unterspannung oder Überspannung zeigen, wobei auch hier die Einwirkdauer schon ausschlaggebend ist. Allerdings können die Störungen der Sensor-Energieversorgung auch komplexere Störsignalform annehmen, die dann insbesondere durch Intensität, Frequenz und Bandbreite zu klassifizieren sind.

Das Problem wurde bisher gelöst, indem ein integrierter Schaltkreis dazu verwendet worden ist, die Sensorsystemspannung zu überwachen. Ein solcher Baustein ist z.B. der MAX823. Fällt die Sensorsystemspannung für eine festgelegte Zeit unter einen bestimmten Wert, so meldet dieser Schaltkreis über einen digitalen Ausgang, dass die Sensorsystemspannung unterschritten wurde. Dieses Signal wird vom Sensorsystem dazu genutzt das Sensorsystem zurückzusetzen und neu zu starten. Oftmals sind solche Schaltkreise bereits in einem Mikrocontroller, wie sie in Sensorsystemen eingesetzt werden integriert.

Dieser Schutz dient nicht dem Erkennen von verfälschten Sensorinformation, sondern wurde primär dazu geschaffen, bei einer Störung, die ein Sensorsystem in einen ungültigen Zustand bringen könnte, nach einem vorübergehenden Aussetzen der Messung wieder definiert und ordnungsgemäß zu starten.

Die Aufgabe der Erfindung besteht darin, eine Lösung für eine verbesserte Überwachung der Versorgungsspannung der Energieversorgung eines Sensorsystems bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Sensorsystem, aufweisend:
- mindestens eine Sensoreinheit,
- einen Eingang einer Energieversorgung, wobei die Energieversorgung, die mindestens eine Sensoreinheit mit elektrischer Energie versorgt, wobei die Energieversorgung eine elektrische Spannung aufweist,
- eine elektrische Schaltung, wobei ein Eingangswert der elektrischen Schaltung die elektrische Spannung ist und wobei ein Ausgangswert der elektrischen Schaltung ein Proportionalitätswert ist, wobei der Proportionalitätswert proportional zu einer Variabilität der elektrischen Spannung ist,
- eine Signalverarbeitungseinheit,
- eine Verbindung zwischen der elektrischen Schaltung und dem Signalverarbeitungseinheit, wobei die Verbindung ausgebildet ist den Ausgangswert von der elektrischen Schaltung an die Signalverarbeitungseinheit zu übertragen,
wobei die Signalverarbeitungseinheit mit einer Abtasteinrichtung verbunden ist, wobei die Abtasteinrichtung ausgebildet ist den Ausgangswert abzutasten, wobei der Ausgangswert herangezogen wird einen Abtastwert zu ermitteln.

Ein Aspekt der Erfindung besteht darin, ein Sensorsystem aufweisend eine elektrische Schaltung, welche einen Proportionalitätswert proportional zu einer Variabilität der elektrischen Spannung einer Energieversorgung ist, bereitzustellen.

Aktuelle Sensorsysteme überwachen die Sensorenergieversorgung nicht oder unzureichend. Sind Sensormessdaten gestört, ist es oft nicht möglich das auf die Versorgungspannung zurückzuführen. Die Erfindung bietet den Vorteil, dass die Überwachung der elektrischen Spannung der Energieversorgung durch die elektrische Schaltung die Signalverarbeitungseinheit entlastet, so dass die Signalverarbeitungseinheit seine Rechenleistung seiner eigentlichen Messaufgabe widmen kann. Ferner kann die Signalverarbeitungseinheit Energie durch eine niedrigere Energieaufnahme sparen.

Variabilität der elektrischen Spannung kann visuell betrachtet anhand der Welligkeit des Signals der elektrischen Spannung über die Zeit betrachtet werden. Die Variabilität ist in hierbei abhängig von der Differenz zwischen maximalen und minimalen Werten der elektrischen Spannung relativ zu den Zeitabständen der zugehörigen maximalen und minimalen Werte. Dabei ist die Variabilität während des Betriebes des Sensorsystems entscheiden, insbesondere während einer Messung, nicht während des Starts oder des Herunterfahrens.

Die hier vorgestellt Lösung überwacht die Qualität, insbesondere die elektrische Spannung der Energieversorgung aller einzelnen Sensoreinheiten, auch als Sensoren bezeichenbar, gemeinsam und nicht die Qualität der Energieversorgung des gesamten Sensorsystems. Hierbei ist es entscheidend zwischen der Sensorsystem-Energieversorgung und der Sensor-Energieversorgung fortan zu unterscheiden. Die Sensorsystem-Energieversorgung versorgt das gesamte Sensorsystem mit Energie (dazu gehören alle Sensoren, ggf. eine Signalverarbeitungseinheit, ein Funkmodul etc.). Die Sensor-Energieversorgung versorgt nur die Sensoren, die ein Sensorsystem beinhaltet und ggf. externe Sensoren, die an ein Sensorsystem angeschlossen sind.

Mit der hier vorgestellten Vorrichtung werden schon kleinere Störungen in der Energieversorgung erkannt, die ein Sensorsystem als Ganzes nicht zum Ausfall bringen würden, aber dessen Messgrößen beeinflussen können. Deshalb zielt die hier vorgestellte Vorrichtung ausschließlich auf die Überwachung der Sensor-Energieversorgung ab, da sich diese besonders und frühzeitig auf das Verhalten der damit gespeisten Sensoren negativ auswirken kann. Negativ, so dass ein irrtümlich und ggf. unbemerkt falscher Messwert erfasst wird.

Damit die Vorrichtung, insbesondere das Sensorsystem, eine gestörte Sensor-Energieversorgung, insbesondere elektrische Spannung der Energieversorgung, erkennen kann, erhebt sie während einer Messung aussagekräftige Qualitätsmerkmale über die Sensor-Energieversorgung, insbesondere die Variabilität der elektrischen Spannung der Energieversorgung. Für diese Qualitätsmerkmale können nun individuelle Schwellwerte für jede auf dem Sensorsystem integrierten Sensoreinheit festgelegt werden. Dies kann bereits im Vorfeld noch unter Laborbedingungen geschehen und gilt für eine Serie von Sensorsystemen. Die Vorrichtung (Schaltung) ist Teil des Sensorsystems.

Ein wichtiges Qualitätsmerkmal, welches eine belastbare Information über die aktuelle Sensor-Energieversorgung trägt, ist die Variabilität, auch als Welligkeit bezeichenbar, der Sensorversorgungsspannung. Ein Proportionalitätswert zur Variabilität der Energieversorgung ist der Root-Mean-Square-Wert (RMS-Wert) der Energieversorgung. Dieser gibt einen Anhaltspunkt, über die Welligkeit der Sensorversorgungsspannung, die teilweise vom Hersteller zum Betrieb eines Sensors mit einer vergleichbaren Messgröße vorgegeben wird. Eine Überschreitung dieser Größe führt zu verfälschten Sensormessdaten, wobei die Ursache oft nicht trivial auf eine gestörte Sensor-Energieversorgung zurückzuführen ist.

Unabhängig von der Einsparung an Energie, liegt ein weiterer Vorteil der Erfindung darin den Signalverarbeitungseinheit zu entlasten, indem die eigentliche Berechnung des RMS-Werts der Sensor-Energieversorgung nicht auf der Signalverarbeitungseinheit läuft, sondern die Signalverarbeitungseinheit den bereits berechneten Wert von der Schaltung entgegennimmt. Damit muss die Signalverarbeitungseinheit nicht nur weniger Abtasten, sondern muss auch die Variabilität der Energieversorgung nicht selbst berechnen und kann somit die eingesparte Rechenleistung für andere Signalverarbeitungsaufgaben des Sensorsystems verwenden.

Die Abtasteinrichtung, welche mit der Signalverarbeitungseinheit verbunden ist, kann intern oder extern der Signalverarbeitungseinheit ausgebildet sein.

In einer Weiterbildung der Erfindung sind die Signalverarbeitungseinheit und/oder das Sensorsystem ausgebildet aus dem Abtastwert ein Qualitätswert abgeleitet wird, wobei der Qualitätswert an eine Auswerteeinheit weiterzuleiten. Das hat den Vorteil, dass die Auswerteeinheit eine Analyse des Qualitätswertes und damit der elektrischen Spannung der Energieversorgung übernimmt. So kann Rechenleistung der Signalverarbeitungseinheit und des Sensorsystems gespart werden und für andere Zwecke eingesetzt werden.

In einer weiteren Weiterbildung der Erfindung die Auswerteeinheit eine Edge-Device oder eine Cloud ist. Das hat den Vorteil, dass die Edge-Device oder die Cloud eine Analyse des Abtastwerts und damit der elektrischen Spannung der Energieversorgung übernehmen. So kann Rechenleistung der Signalverarbeitungseinheit und des Sensorsystems gespart werden und für andere Zwecke eingesetzt werden.

In einer weiteren Weiterbildung der Erfindung wird der Abtastwert mit mindestens einem Schwellwert in Relation gesetzt und in Abhängigkeit der Relation mindestens eine Aktion getriggert wird. Das hat den Vorteil, dass ab einem bestimmten Schwellwert der Variabilität der Energieversorgung eine Aktion getriggert werden kann.

Mindestens ein Schwellwert, weil so je nach Anwendungsfall verschiedene Störgrößen akzeptabel sein können.

Ferner, kann ein Sensorsystem mehrere Sensoren haben, wobei für jeden Sensor auf dem Sensorsystem eine oder mehrere individuelle Auswerteschaltung erforderlich sein können. Unabhängig davon, wird für jeden Sensor auf einem Sensorsystem mindestens ein Schwellwert festgelegt.

In einer weiteren Weiterbildung der Erfindung ist die Aktion, die in Abhängigkeit der Relation des Abtastwerts mit dem Schwellwert getriggert wird, eine Wartung und/oder ein Abschalten einer mit dem Sensorsystem verbundenen Einheit.

In einer weiteren Weiterbildung der Erfindung ist das Sensorsystem ausgebildet die mit dem Sensorsystem verbundenen Einheit zu überwachen.

In einer weiteren Weiterbildung der Erfindung ist die mit dem Sensorsystem verbundenen Einheit eine Produktionsanlage, ein Energiekraftwerk, ein Motor, ein medizintechnisches Gerät oder ein technisches Gerät.

Die Überwachung der mit dem Sensorsystem verbundenen Einheit hat den Vorteil, dass Fehler im Betrieb der verbunden Einheit schnell und fehlerfrei erkannt werden und behoben werden können oder entsprechende Aktionen, insbesondere ein Abschalten der verbundenen Einheit, um größere Schäden zu vermeiden, eingeleitet werden kann.

In einer weiteren Weiterbildung der Erfindung ist die Abtasteinrichtung als Analog-Digital-Umsetzer ausgebildet. Das hat den Vorteil, dass ein analoges Signal in ein digitale umgewandelt werden kann und das digitale Signal weitergeleitet werden kann.

In einer weiteren Weiterbildung der Erfindung ist die Variabilität der elektrischen Spannung von einer Intensität, einer Frequenz und/oder einer Bandbreite der Energieversorgung und/oder der elektrischen Spannung abhängig. Variabilität der elektrischen Spannung kann visuell betrachtet anhand der Welligkeit des Signals der elektrischen Spannung über die Zeit betrachtet werden. Eine hohe Variabilität bedeutet eine hohe Differenz zwischen maximalen und minimalen Werten der elektrischen Spannung in relativ kurzen Zeitabständen. Dabei ist die Variabilität während des Betriebes des Sensorsystems entscheiden, nicht während des Starts oder des Herunterfahrens.

Die Merkmale der Variabilität der elektrischen Spannung, also deren Intensität, Frequenz und/oder Bandbreite und auch die Dauer dieser Merkmale sind über die Schaltungskomponenten parametrisierbar. Dadurch ist es möglich die Empfindlichkeit der Schaltung auf eine Anwendung maßzuschneidern, wodurch nur relevante Störeinflüsse mit im Proportionalitätswert als Information getragen werden. Relevante Störeinflüsse sind die für das Verfälschen der Sensorwerte verantwortlichen Eigenschaften einer Störung (Frequenz, Bandbreite und auch die Dauer) .

In einer weiteren Weiterbildung der Erfindung ist die Variabilität der elektrischen Spannung durch den Root-Mean-Square-Wert der elektrischen Spannung gegeben. Das hat den Vorteil, dass die Variabilität der elektrischen Spannung proportional zum Root-Mean-Square-Wert der elektrischen Spannung ist. Das hat den Vorteil, dass der Root-Mean-Square-Wert der elektrischen Spannung von einer elektrischen Schaltung modelliert und ausgegeben werden kann. Dadurch kann Energie und Rechenleistung einer Signalverarbeitungseinheit gespart werden.

In einer weiteren Weiterbildung der Erfindung weist die elektrische Schaltung einen Gleichrichter und einen Verstärker auf. Das hat den Vorteil, dass der Root-Mean-Square-Wert der elektrischen Spannung von einer elektrischen Schaltung modelliert und ausgegeben werden kann. Dadurch kann Energie und Rechenleistung einer Signalverarbeitungseinheit gespart werden.

In einer weiteren Weiterbildung der Erfindung ist der Schwellwert durch maschinelles Lernen in Abhängigkeit von der Variabilität und/oder Qualitätsmerkmalen für die mindestens eine Sensoreinheit bestimmbar.

In einer weiteren Weiterbildung der Erfindung ist die Signalverarbeitungseinheit als Mikrocontroller, FPGA, DSP oder programmierbarer Chip ausgebildet.

Eine Erweiterung der Erfindung sieht somit ein nachgeschaltetes Supervised Machine Learning vor, welches den RMS-Wert zusammen mit ggf. anderen Qualitätsmerkmalen aufnimmt, um deren Schwellwerte optimal für jede Sensoreinheit einzeln zu bestimmen. Die Erweiterung macht sich die Information zu Nutze, aus der hervorgeht, ob eine durch das Sensorsystem überwachte Maschine gerade gestörte Werte aufweist oder nicht. Diese Information kann manuell durch eine Person unter Laborbedingungen zugeführt werden.

Alternativ kann auf das manuelle Supervised Machine Learning verzichtet werden, falls auf dem Sensorsystem eine Sensordatenanomalieerkennung existiert. Die Sensordatenanomalieerkennung liegt dann auf einem Sensorsystem vor, wenn es Qualitätsmerkmale für die eigentlichen Sensordaten auf dem Sensorsystem bereits berechnet werden.

Unabhängig davon ob das Supervised Learning manuell durch einen Menschen oder durch Sensordatenanomalieerkennung erfolgt, lernt das System nach und nach die Schwelle für die Qualitätsmerkmale optimal für jeden Sensor individuell zu setzen, so dass optimal zwischen einer gestörten Sensorspannung und einer ungestörten Sensorspannung für jeden Sensor einzeln unterscheiden werden kann. Wie zuvor in der Einleitung erwähnt kann sich ein bestimmter RMS-Wert auf den einen Sensor auf dem Sensorsystem negativ auswirken, während ein zweiter Sensor auf dem Sensorsystem davon nicht betroffen ist, weil die Toleranzschwelle für Störungen auf der Energieversorgung beim zweiten Sensors höher als die des ersten Sensors ist. Die Schwellwerte können nach wie vor im Labor ermittelt werden, allerdings mit dieser AI-Erweiterung mit weniger Aufwand und mit höherer Präzision.

Die Erfindung umfasst außerdem ein zugehöriges Verfahren zur Überwachung eines Sensorsystems. Das Verfahren weist die folgenden Schritte auf:
- Übertragen einer Energieversorgung an mindestens eine Sensoreinheit mit elektrischer Energie versorgt, wobei die Energieversorgung eine elektrische Spannung aufweist,
- Messen der elektrischen Spannung durch eine elektrische Schaltung,
- Ausgeben eines Proportionalitätswert durch die elektrische Schaltung, wobei der Proportionalitätswert proportional zu einer Variabilität der elektrischen Spannung ist,
- Übertragen des Proportionalitätswerts von der elektrischen Schaltung an eine Abtasteinrichtung und Abtasten des Proportionalitätswerts, wobei der Proportionalitätswert herangezogen wird einen Abtastwert zu ermitteln und
- Übertragen des Abtastwertes an eine Signalverarbeitungseinheit.

In einer Weiterbildung der Erfindung ist zuvor genannte Verfahren zur Überwachung eines erfindungsgemäßen Sensorsystems ausgebildet.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: eine schematische Darstellung eines Sensorsystems,
- Fig. 2: ein Ablaufdiagramm des erfindungsgemäßen Verfahrens zur Überwachung eines Sensorsystems,
- Fig. 3: eine elektrische Schaltung zur Modellierung der Variabilität der elektrischen Spannung,
- Fig. 4: den Zusammenhang des Root-Mean-Square-Werts der elektrischen Spannung und dem von einer elektrischen Schaltung modellierten Variabilitätswert der elektrischen Spannung und
- Fig. 5: das Zeitverhalten der elektrischen Schaltung.

### DETAILLIERTE BESCHREIBUNG DER ERFINDUNG

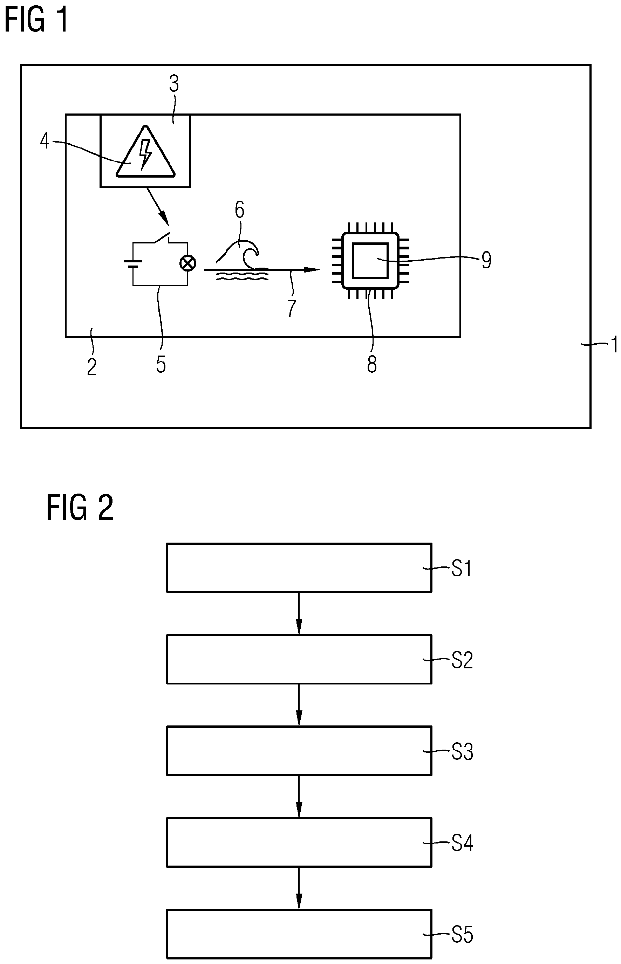

Fig. 1 zeigt ein Sensorsystem 1 aufweisend:
- mindestens eine Sensoreinheit 2,
- einen Eingang einer Energieversorgung 3, wobei die Energieversorgung 3 die mindestens eine Sensoreinheit 2 mit elektrischer Energie versorgt, wobei die Energieversorgung eine elektrische Spannung 4 aufweist,
- eine elektrische Schaltung 5, wobei ein Eingangswert der elektrischen Schaltung 5 die elektrische Spannung 4 ist und wobei ein Ausgangswert der elektrischen Schaltung 5 ein Proportionalitätswert 6 ist, wobei der Proportionalitätswert 6 proportional zu einer Variabilität der elektrischen Spannung 4 ist,
- eine Signalverarbeitungseinheit 8,
- eine Verbindung 7 zwischen der elektrischen Schaltung 5 und die Signalverarbeitungseinheit 8, wobei die Verbindung 7 ausgebildet ist den Ausgangswert von der elektrischen Schaltung an die Signalverarbeitungseinheit 8 zu übertragen,
wobei die Signalverarbeitungseinheit 8 mit einer Abtasteinrichtung 9 verbunden ist, wobei die Abtasteinrichtung 9 ausgebildet ist den Ausgangswert abzutasten, wobei der Ausgangswert herangezogen wird einen Abtastwert zu ermitteln.

Ein Aspekt der Erfindung besteht darin, ein Sensorsystem aufweisend eine elektrische Schaltung, welche einen Proportionalitätswert proportional zu einer Variabilität der elektrischen Spannung einer Energieversorgung ist, bereitzustellen.

Aktuelle Sensorsysteme überwachen die Sensorenergieversorgung nicht oder unzureichend. Sind Sensormessdaten gestört, ist es oft nicht möglich das auf die Versorgungspannung zurückzuführen. Die Erfindung bietet den Vorteil, dass die Überwachung der elektrischen Spannung der Energieversorgung durch die elektrische Schaltung die Signalverarbeitungseinheit entlastet, so dass die Signalverarbeitungseinheit seine Rechenleistung seiner eigentlichen Messaufgabe widmen kann. Ferner kann die Signalverarbeitungseinheit Energie durch eine niedrigere Energieaufnahme sparen.

Die Abtasteinrichtung 9, welche mit der Signalverarbeitungseinheit 8 verbunden ist, kann intern (Fig. 1) oder extern (nicht dargestellt) der Signalverarbeitungseinheit 8 ausgebildet sein.

Das Sensorsystem kann wie in Fig. 1 dargestellt eine elektrische Schaltung 5 oder auch mehrere elektrische Schaltungen 5 aufweisen.

Fig. 2 ein Ablaufdiagramm des erfindungsgemäßen Verfahrens zur Überwachung eines Sensorsystems. Das Verfahren weist die folgenden Schritte auf:
- Schritt S1: Übertragen einer Energieversorgung 3 an mindestens eine Sensoreinheit 2 mit elektrischer Energie versorgt, wobei die Energieversorgung 3 eine elektrische Spannung 4 aufweist,
- Schritt S2: Messen S2 der elektrischen Spannung 4 durch eine elektrische Schaltung 5,
- Schritt S3: Ausgeben eines Proportionalitätswert 6 durch die elektrische Schaltung 5, wobei der Proportionalitätswert 5 proportional zu einer Variabilität der elektrischen Spannung 4 ist,
- Schritt S4: Übertragen des Proportionalitätswerts 6 von der elektrischen Schaltung 5 an eine Abtasteinrichtung 9 und Abtasten des Proportionalitätswerts 6, wobei der Proportionalitätswert 6 herangezogen wird einen Abtastwert zu ermitteln
- Schritt S5: Übertragen des Abtastwertes an eine Signalverarbeitungseinheit.

In einer Weiterbildung der Erfindung ist zuvor genannte Verfahren zur Überwachung eines erfindungsgemäßen Sensorsystems ausgebildet.

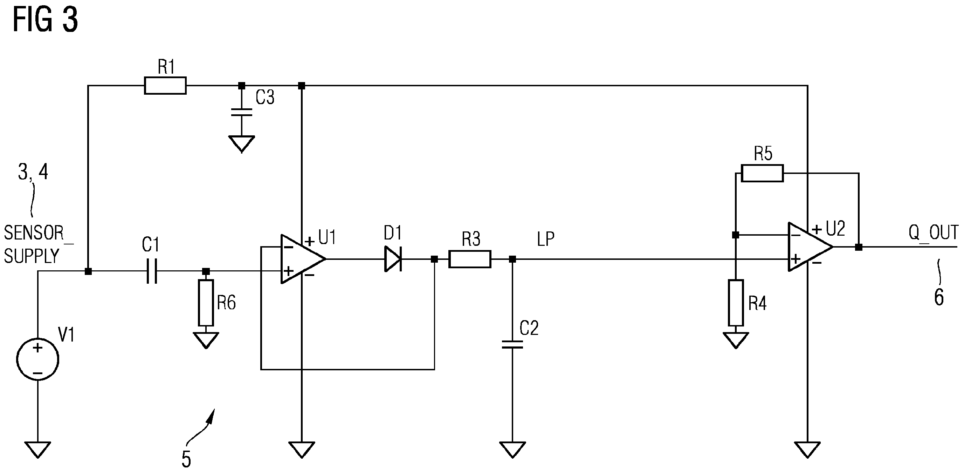

Fig. 3 zeigt eine elektrische Schaltung 5 zur Modellierung der Variabilität der elektrischen Spannung 4. Die elektrische Schaltung 5 (bespielhafte Schaltung, hier mit Gleichrichter und Verstärker) dient zur Messung des RMS-Wertes (RMS-Wert ein zur Variabilität bzw. Welligkeit der Versorgungspannung bzw. Energieversorgung proportionaler Wert) mit einer in der elektrischen Schaltung 5 ausgelegten Bandbreite von 3300 Hz als Qualitätsmerkmal für die Energieversorgung 3. Die Schaltung ist so ausgelegt, dass sie die Energieversorgung 3 für die Sensoreinheiten am Netz "SENSOR_SUPPLY" zugeführt bekommt, darüber zugleich selbst versorgt wird und dazu ausgelegt ist, für die Signalverarbeitungseinheit 8 ein Signal 6, der Proportionalitätswert 6, am Netz Q OUT auszugeben, welches die Signalverarbeitungseinheit 8 mit seinem eingebauten Analog-Digital-Umsetzer nunmehr mit niedriger Abtastfrequenz abtasten kann.

Das hat den Vorteil, dass der Root-Mean-Square-Wert der elektrischen Spannung von einer elektrischen Schaltung modelliert und ausgegeben werden kann. Dadurch kann Energie und Rechenleistung einer Signalverarbeitungseinheit gespart werden.

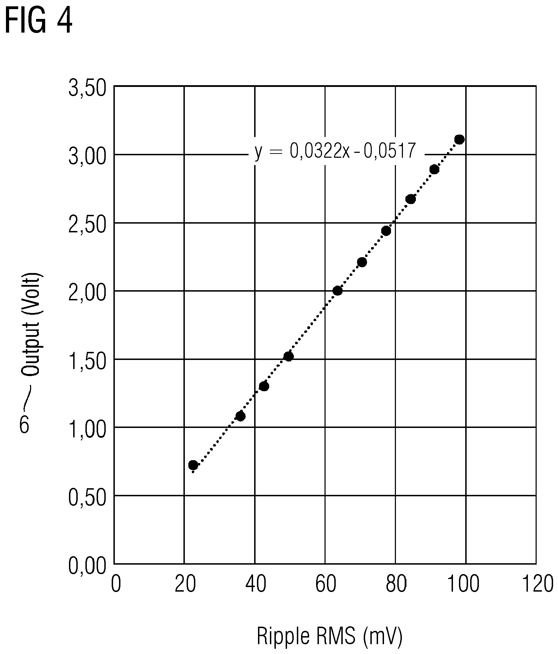

Fig. 4 zeigt den Zusammenhang des Root-Mean-Square-Werts der elektrischen Spannung 4 und dem von einer elektrischen Schaltung 5 modellierten Variabilitätswert/Proportionalitätswert 6 der elektrischen Spannung 4. Der Variabilitätswert/Proportionalitätswert 6 ist das am Ausgang der elektrischen Schaltung 5 anliegenden Signals (welches die Signalverarbeitungseinheit 8 mit dem verbundenen Analog-Digital-Umsetzer nunmehr mit niedriger Abtastfrequenz abtasten kann und dass proportional zur Welligkeit der Versorgungsspannung ist) .

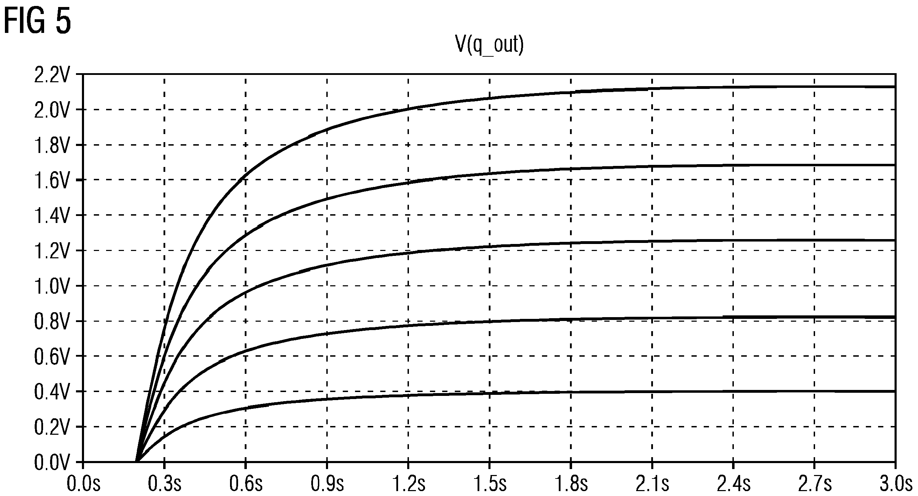

Fig. 5 zeigt das Zeitverhalten der elektrischen Schaltung 5. Aus der Figur kann das Zeitverhalten (Schnelligkeit der Reaktion) der elektrischen Schaltung 5 ermittelt werden, was in diesem Beispiel bei 1.3 Sekunden lagt. Dieses Zeitverhalten erlaubt eine niedrigere Abtastung. Interpretation: Spitzen (kurze Welligkeiten) gehen verloren und werden nicht erfasst, das ist aber in Ordnung, da diese nicht relevant sind und der Microcontroller so nicht unnütz geweckt wird.

Eine herkömmliche Lösung sieht vor, dem Signalverarbeitungseinheit die Sensorspannung direkt zuzuführen, wobei dann eine Abtastrate von deutlich mehr als 6600 Abtastpunkte pro Sekunde und eine höhere Auflösung des Analog-Digital-Umsetzers erforderlich wäre, um das gleiche Ziel zu erreichen, da für eine Bandbreite von 3300 Hz eine Abtastung mit mindestens doppelten Abtastrate erforderlich ist.

Es ist in diesem Beispiel nunmehr eine Abtastrate von ca. 2 bis 3 Abtastpunkten pro Sekunde erforderlich. Die Schaltung entlastet die Signalverarbeitungseinheit in seiner Arbeit, wie auch in den Anforderungen an den Analog-Digital-Umsetzer. Damit kann die Signalverarbeitungseinheit in einen tieferen Schlafmodus (auch für 2 ms) gehen, was insbesondere bei Ultra-Low-Power-Techniken, wie sie im Detail in [TES2015] beschrieben sind erforderlich ist, die insbesondere den Verzicht auf Direct Memory Access (DMA) erfordern. Der DMA wäre allerdings bei Abtastraten größer 6600 Abtastpunkten pro Sekunde erforderlich. Damit entlastet die Schaltung die Signalverarbeitungseinheit, was die Energieaufnahme deutlich senkt.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Sensorsystem (1),
aufweisend:
- mindestens eine Sensoreinheit (2),
- einen Eingang einer Energieversorgung (3), wobei die Energieversorgung (3) die mindestens eine Sensoreinheit (2) mit elektrischer Energie versorgt, wobei die Energieversorgung eine elektrische Spannung (4) aufweist,
- mindestens eine elektrische Schaltung (5), wobei ein Eingangswert der mindestens einen elektrischen Schaltung (5) die elektrische Spannung (4) ist und wobei ein Ausgangswert der mindestens einen elektrischen Schaltung (5) ein Proportionalitätswert (6) ist, wobei der Proportionalitätswert (6) proportional zu einer Variabilität der elektrischen Spannung (4) ist,
- eine Signalverarbeitungseinheit (8),
- eine Verbindung (7) zwischen der mindestens einen elektrischen Schaltung (5) und dem Signalverarbeitungseinheit (8), wobei die Verbindung (7) ausgebildet ist den Ausgangswert von der mindestens einen elektrischen Schaltung an den Signalverarbeitungseinheit (8) zu übertragen,
wobei der Signalverarbeitungseinheit (8) mit einer Abtasteinrichtung (9) verbunden ist, wobei die Abtasteinrichtung (9) ausgebildet ist den Ausgangswert abzutasten, wobei der Ausgangswert herangezogen wird einen Abtastwert zu ermitteln.

2. Sensorsystem nach Anspruch 1,
wobei der Signalverarbeitungseinheit (8) und/oder das Sensorsystem (1) ausgebildet sind, aus dem Abtastwert ein Qualitätswert abgeleitet wird, wobei der Qualitätswert an eine Auswerteeinheit weiterzuleiten.

3. Sensorsystem nach Anspruch 2,
wobei die Auswerteeinheit eine Edge-Device oder eine Cloud ist.

4. Sensorsystem nach einem der vorhergehenden Ansprüche, wobei der Abtastwert mit mindestens einem Schwellwert in Relation gesetzt wird und in Abhängigkeit der Relation mindestens eine Aktion getriggert wird.

5. Sensorsystem nach Anspruch 4,
wobei die Aktion eine Wartung und/oder ein Abschalten einer mit dem Sensorsystem (1) verbundenen Einheit ist.

6. Sensorsystem nach Anspruch 5,
wobei das Sensorsystem (1) ausgebildet ist die mit dem Sensorsystem (1) verbundenen Einheit zu überwachen.

7. Sensorsystem nach Anspruch 5 oder 6,
wobei die mit dem Sensorsystem (1) verbundenen Einheit eine Produktionsanlage, ein Energiekraftwerk, ein medizintechnisches Gerät oder ein technisches Gerät ist.

8. Sensorsystem nach einem der vorhergehenden Ansprüche,
wobei die Abtasteinrichtung (9) als Analog-Digital-Umsetzer ausgebildet ist.

9. Sensorsystem nach einem der vorhergehenden Ansprüche,
wobei die Variabilität der elektrischen Spannung (4) abhängig von:
- einer Intensität,
einer Frequenz und/oder
einer Bandbreite
der Energieversorgung und/oder der elektrischen Spannung ist.

10. Sensorsystem nach einem der vorhergehenden Ansprüche,
wobei die Variabilität der elektrischen Spannung (4) durch den Root-Mean-Square-Wert der elektrischen Spannung gegeben ist.

11. Sensorsystem nach einem der vorhergehenden Ansprüche,
wobei die mindestens eine elektrische Schaltung (5) einen Gleichrichter und einen Verstärker aufweist.

12. Sensorsystem nach einem der vorhergehenden Ansprüche mit Anspruch 4,
wobei der Schwellwert durch maschinelles Lernen in Abhängigkeit von der Variabilität und/oder Qualitätsmerkmalen für die mindestens eine Sensoreinheit (5) bestimmbar ist.

13. Sensorsystem nach einem der vorhergehenden Ansprüche,
wobei die Signalverarbeitungseinheit (8) als Mikrocontroller, FPGA, DSP oder programmierbarer Chip ausgebildet ist.

14. Verfahren zur Überwachung eines Sensorsystems (1), aufweisend die Schritte:
- Übertragen (S1) einer Energieversorgung (3) an mindestens eine Sensoreinheit (2) mit elektrischer Energie versorgt, wobei die Energieversorgung (3) eine elektrische Spannung (4) aufweist,
- Messen (S2) der elektrischen Spannung (4) durch mindestens eine elektrische Schaltung (5),
- Ausgeben (S3) eines Proportionalitätswert (6) durch die mindestens eine elektrische Schaltung (5), wobei der Proportionalitätswert (6) proportional zu einer Variabilität der elektrischen Spannung (4) ist,
- Übertragen (S4) des Proportionalitätswerts (5) von der mindestens einen elektrischen Schaltung (5) an eine Abtasteinrichtung (9) und Abtasten des Proportionalitätswerts (6), wobei der Proportionalitätswert (6) herangezogen wird einen Abtastwert zu ermitteln und
- Übertragen (S5) des Abtastwertes an eine Signalverarbeitungseinheit (8).

15. Verfahren nach Anspruch 14 zur Überwachung eines Sensorsystems (1) nach einem der Ansprüche 1 bis 13.
